# EUROPEAN PATENT SPECIFICATION

(11) **EP 4 206 787 B1**
(45) Date of publication and mention of the grant of the patent: **22.10.2025**
(21) Application number: 21928892.5
(22) Date of filing: 29.12.2021
(51) Int. Cl.: G02B 27/01

(54) **OPTICAL MODULE AND OPTICAL SYSTEM THEREOF FOR HEAD-UP DISPLAY, AND VEHICLE**
OPTISCHES MODUL UND OPTISCHES SYSTEM DAFÜR FÜR HEAD-UP-ANZEIGE UND FAHRZEUG
MODULE OPTIQUE ET SON SYSTÈME OPTIQUE POUR AFFICHAGE TÊTE HAUTE, ET VÉHICULE

(30) Priority: 04.03.2021 CN 202110239212
(43) Date of publication of application: 05.07.2023
(73) Proprietor: Zhejiang Crystal-Optech Co., Ltd., Taizhou, Zhejiang 318015 (CN)
(72) Inventor: MA, Honghu, Taizhou, Zhejiang 318015 (CN); LI, Licao, Taizhou, Zhejiang 318015 (CN); HU, Beibei, Taizhou, Zhejiang 318015 (CN); WANG, Qiyu, Taizhou, Zhejiang 318015 (CN); LIU, Fenglei, Taizhou, Zhejiang 318015 (CN)
(74) Representative: Marks & Clerk LLP
(86) International application number: PCT/CN2021/142663
(87) International publication number: WO 2022/183821

(56) References cited:
- CN-A- 110 753 875
- CN-A- 110 770 635
- CN-A- 112 835 198
- CN-U- 210 666 204
- CN-U- 210 666 208
- CN-U- 211 375 181
- CN-U- 211 375 181
- JP-A- 2000 131 682
- US-A1- 2019 293 931
- US-A1- 2020 201 037

## Description

### Technical Field

The present disclosure relates to the technical field of head-up display, and in particular relates to an optical module and an optical system thereof for head-up display, and a vehicle.

### Background Art

With the development of technologies, the application of head-up display technology (HUD) to the automobile field becomes more and more common, and in recent years, augmented reality head-up display (AR HUD) also starts to be applied to some high-end automobiles. As the AR HUD may have a larger angle of field of view and a longer virtual image distance, and can make a displayed image and a real object fused with each other, it is more favored by users.

However, since the AR HUD optical element has a relatively large area, more energies of external sunshine enter the optical system; in addition, since the virtual image is relatively far away, a position of an image generation unit is closer to a focal point of an optical imaging system compared with common HUD. Therefore, when sunshine backflow occurs, the sunlight energies are more concentrated on the image generation unit; correspondingly, the temperature of an illumination area of the image generation unit is quite high, and if it is left untreated, the temperature may reach 300 °C in extreme cases, far exceeding an operation temperature (generally 105 °C) of a common image generation unit, which affects the imaging quality, and further may cause damage of the image generation unit due to overheating in severe cases, affecting the operation performance thereof.

US2020201037AI discloses an information display apparatus, which has a housing with an opening and a transparent cover formed on the opening, the housing includes image-light generating means configured to generate image light that displays the image information and an optical system configured to allow a driver of the vehicle to recognize image information based on the image light from the image-light generating means as a virtual image in front of the windshield. When S-polarized light on the windshield is assumed to be a first polarized wave while polarized light that orthogonally crosses the S-polarized light in a polarizing direction is assumed to be a second polarized wave, the image-light generating means is configured to generate the image light made of the first polarized wave, and a transmittance/reflectance control means blocks a part of the first polarized wave and the second polarized wave of incident external light entering the housing from the opening.

### Summary

The present disclosure provides an optical module according to claim 1 and an optical system thereof for head-up display, and a vehicle, wherein the temperature of an image generation unit can be effectively reduced, and the imaging quality and operation performance can be improved.

Some embodiments of the present disclosure provide an optical module for head-up display, wherein the optical module may include an image generation element and a light blocking assembly which are provided in sequence, wherein the image generation element can be configured to form an image signal, the image signal is incident on a receiving end through the light blocking assembly; and the light blocking assembly further may be configured
to make a part of external light transmitted according to a polarization direction and/or wavelength.

The light blocking assembly includes a polarizing dust-proof film, wherein the polarizing dust-proof film includes a transparent substrate and a polarizing film arranged on the transparent substrate, and a polarization direction of the polarizing film is the same as a light-emitting direction of the image generation element.

Optionally, the polarizing film may be an absorption-type polarizing film or a reflection-type polarizing film.

The light blocking assembly further includes a light filtering element, and the light filtering element is located between the polarizing dust-proof film and the image generation element, so as to make a part of external light transmitted according to the wavelength.

Optionally, the light filtering element may be at least configured to filter infrared light and transmit visible light.

Optionally, the light filtering element further may filter ultraviolet light.

The image generation element and the light filtering element are attached to each other.

According to an example, which is not covered by the present set of claims, the light filtering element and the image generation element are separately arranged in a light path at intervals.

Optionally, at least one reflecting surface further may be provided between the polarizing dust-proof film and the light filtering element, and configured to reflect light beams incident on the polarizing dust-proof film towards the light filtering element or reflect light beams incident on the light filtering element towards the polarizing dust-proof film.

Optionally, the reflecting surface may be a curved surface.

Some other embodiments of the present disclosure provide an optical system for head-up display, wherein the optical system may include: a backlight module and the optical module for head-up display provided in some embodiments of the present disclosure, and wherein the image generation element of the optical module for head-up display may be located on a light emergent side of the backlight module.

Some further embodiments of the present disclosure provide a vehicle, wherein the vehicle may include: a vehicle body and the optical system for head-up display provided in some other embodiments of the present disclosure, wherein the optical system for head-up display may be provided on the vehicle body, and the light blocking assembly and the receiving end of the optical system for head-up display are respectively located at two sides of a windscreen of the vehicle body.

The embodiments of the present disclosure provide the optical module and the optical system thereof for head-up display, and the vehicle. The optical module for head-up display includes the image generation element and the light blocking assembly which are provided in sequence, wherein the image generation element is configured to generate an image, light beams emitted from the light source, after passing through the image generation element, form the image light and generate the image signal, and then the image light with image signal information, after passing through the light blocking assembly, is received by a rear-end receiving end and forms an image. The image light is not affected or is rarely affected by the light blocking assembly when passing through the light blocking assembly, and original parameters of the image light remain unchanged, for example, the brightness of the image light is unchanged after passing through the light blocking assembly. In this process, the external light will be incident on the optical module for head-up display from the side of the receiving end, and the external light passes through the light blocking assembly and the image generation element in sequence, wherein the external light does not generate an image after passing through the image generation element, but the light heat of the external light will be gathered on the image generation element, increasing the temperature of the image generation element, and affecting the operation performance of the image generation element. Therefore, the light blocking assembly is used to filter out most of the external light, make a small part of the external light pass through, reduce the light heat of the external light on the image generation element, and reduce the temperature of the image generation element, so as to guarantee the operation performance of the image generation element. The light blocking assembly has no or little influence on the image light, and can make the image light pass through; however, the light blocking assembly can select which part of the external light can be transmitted according to the polarization direction or a wavelength of the light, or by combining the polarization direction and the wavelength, wherein the light blocking assembly filters out most of the external light, and only a small part of the external light will pass through, such that the image light is received by the receiving end so as to generate an image. After the external light is filtered out by the light blocking assembly, the amount of the external light incident on the image generation element is reduced, and the light heat gathered onto the image generation element can be effectively reduced, achieving the purpose of reducing a surface temperature of the image generation element, and ensuring the image quality.

Optionally, the optical system for head-up display includes the backlight module and the optical module for head-up display in the above, and the image light is formed by illuminating the image generation element by the backlight module.

Optionally, by providing the optical system for head-up display, information such as the current speed per hour of the vehicle and navigation can be projected onto an optoelectronic display device on the windscreen by providing the optical system for head-up display, and an image is formed in front of the windscreen. The driver can see navigation and vehicle speed information by directly looking at the windscreen without turning or lowering head, thus improving the driving safety. Moreover, by means of the optical system for head-up display, the problem of sunshine backflow is solved and ameliorated, so that the driver can see an image with relatively good quality on the windscreen, thus improving the comfort degree of the driver experience.

### Brief Description of Drawings

In order to more clearly illustrate technical solutions of embodiments of the present disclosure, drawings which need to be used in the embodiments of the present disclosure will be introduced briefly below, and it should be understood that the drawings below merely show some embodiments of the present disclosure, therefore, they should not be considered as limitation on the scope, and those ordinarily skilled in the art still could obtain other relevant drawings according to these drawings, without using any inventive efforts.
FIG. 1 is a structural schematic diagram of an optical module for head-up display provided in the present embodiment;
FIG. 2 is a schematic diagram of sunlight distribution;
FIG. 3 is a schematic diagram of sunlight passing through a polarizing dust-proof film;
FIG. 4 is a distribution schematic diagram of sunlight after being filtered; and
FIG. 5 is a schematic diagram of sunlight when passing through a light filtering element.

Reference Signs: 101-backlight module; 102-image generation element; 103-light filtering element; 104-first reflecting mirror; 105-second reflecting mirror; 106-polarizing dust-proof film; 1061-transparent substrate; 1062-polarizing film; 107-windscreen; 108-eyebox.

### Detailed Description of Embodiments

The technical solutions in the embodiments of the present disclosure will be described clearly and completely below in conjunction with drawings in the embodiments of the present disclosure.

In the description of the present disclosure, it should be noted that orientation or positional relationships indicated by terms such as "inner" and "outer" are based on orientation or positional relationships as shown in the drawings, or orientation or positional relationships of a product of the present disclosure when being conventionally placed in use, merely for facilitating describing the present disclosure and simplifying the description, rather than indicating or suggesting that related devices or elements have to be in the specific orientation or configured and operated in a specific orientation, therefore, they should not be construed as limitation to the present disclosure. Besides, terms such as "first" and "second" are merely used for distinguishing the description, but should not be construed as indicating or implying importance in the relativity.

It also needs to be indicated that unless otherwise specified and defined explicitly, terms "provide" and "connect" should be construed in a broad sense. For example, it may be a fixed connection, and also may be a detachable connection, or an integrated connection; it may be a direct connection, an indirect connection through an intermediary, or an inner communication between two elements. For those ordinarily skilled in the art, specific meanings of the above-mentioned terms in the present disclosure could be understood according to specific circumstances.

Head-up display, HUD for short, is also called as a parallel display system, and refers to a driver-centered, eye-free-operation, and multi-functional instrument panel. Taking the driver as the center aims at making it more convenient for the driver to see a vehicle-mounted screen and operate knobs when driving; making eye-free operation is to make the driver not move line of sight away from the front as far as possible; and being capable of displaying navigation information on the multi-functional instrument panel aims at distracting the driver as little as possible when looking at the navigation. In short, the purpose is to make the driver not always look around when driving and well watch road conditions in front.

The HUD can project information such as current speed per hour and navigation onto a photoelectric display device on a windscreen, so as to form an image in front of the windscreen. The driver can see the navigation and vehicle speed information without turning or lowering head.

In recent years, the augmented reality head-up (AR HUD) also starts to be applied to some high-end automobiles. However, since the AR HUD optical element has a relatively large area, more energies of external sunshine enter the optical system; on the other hand, since the virtual image is far away, a position of an image generation unit is closer to a focal point of an optical imaging system compared with a common HUD. Therefore, when sunshine backflow occurs, the sunlight energies are more concentrated on the image generation unit, and in this case, the temperature of an illumination area of the image generation unit is quite high. In order to ensure the imaging quality of the image, the temperature of the illumination area of the image generation unit needs to be reduced.

CN109219767A proposes a solution, in which a cold mirror (plane mirror) is used to replace a common plane mirror in an imaging system. As the cold mirror only reflects visible light and transmits infrared rays and ultraviolet rays, and the proportion of energies carried by the infrared rays in the sunlight is relatively high, the energies reaching the surface of the image generation unit can be effectively reduced, and the surface temperature thereof is further reduced.

However, as the cold mirror film system is complex and has a high customization cost, it is usually made to have a relatively large area and is then cut according to actual needs, so as to satisfy different requirements, therefore the cold mirror generally appears in the form of plane mirror. However, as the customers' requirements become higher and higher, the current combination of free curved surface + plane mirror cannot meet the customers' requirements for image quality. It is generally required to make two stages of reflecting mirrors into curved surfaces so as to meet the requirements. In this case, the application of the cold mirror technology is greatly limited.

An embodiment of the present disclosure provides an optical module for head-up display, aiming at solving the problem that the image generation unit such as a thin film transistor and a liquid crystal display cannot operate due to overheating caused by sunshine backflow in a using process of head-up display, particularly augmented reality head-up display. The optical module for head-up display in the embodiment of the present disclosure can prevent part of sunlight from entering the optical module for head-up display, and effectively prevent infrared light and ultraviolet light from reaching a surface of an image generation element 102, so as to reduce a surface temperature thereof; and a design in which two stages of reflecting mirrors are both curved surfaces may also be used to meet the requirements for imaging quality.

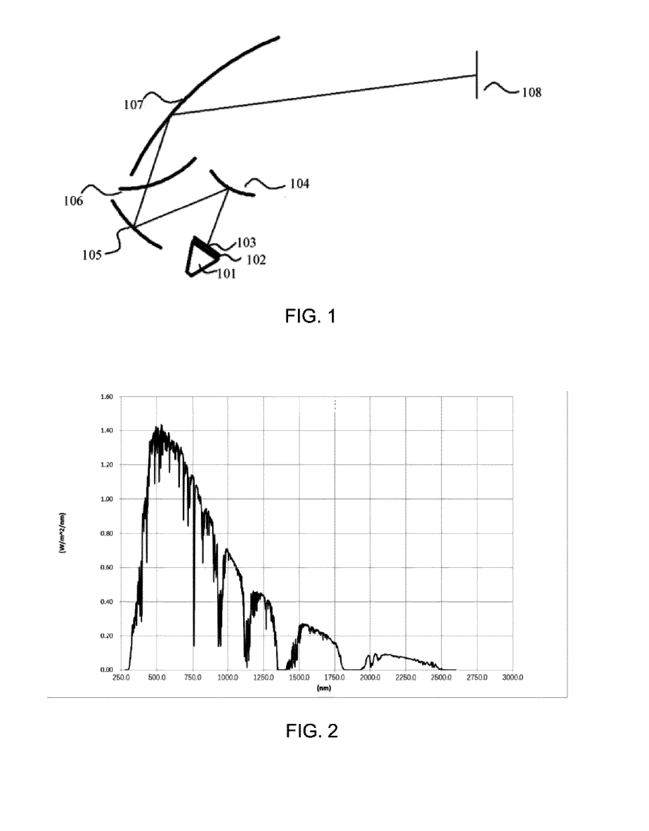

Specifically, referring to FIG. 1, some embodiments of the present disclosure provide an optical module for head-up display, wherein the optical module includes the image generation element 102 and a light blocking assembly which are provided in sequence, wherein the image generation element 102 is configured to form an image signal, the image signal is incident on a receiving end through the light blocking assembly, and wherein the light blocking assembly is further configured to make a part of external light transmitted according to a polarization direction and/or wavelength.

In the head-up display technology, the image generation element 102 is generally a thin film transistor liquid crystal display (TFT LCD), a light source is located at a light incident side of the image generation element 102, the light source and the image generation element 102 are arranged in cooperation, and light beams emitted by the light source form image light after passing through the image generation element 102, so as to generate an image signal, wherein the image light or the image signal is incident on the receiving end after passing through the light blocking assembly, and an image is formed after the image signal is received at the receiving end.

When the image signal passes through the light blocking assembly, the light blocking assembly has no or little influence on the image signal, so as to ensure that the image received by the receiving end is not affected by the light blocking assembly, and ensure image brightness and image quality thereof.

When the light blocking assembly uses polarization to block light, a light blocking assembly with a polarization direction consistent with a light-emitting direction of the image light can be used. Therefore, the light blocking assembly does not work on the image light, and the image light may be transmitted. When the light blocking assembly uses wavelength light to block light, a light blocking assembly capable of transmitting an image light wavelength can be selected, and the image light also may be transmitted.

However, the light blocking assembly has a screening function for external light, and it screens the external light according to a polarization direction or a wavelength of the light, or by combining the polarization direction and the wavelength, so that a part of the external light is transmitted, and a part of the external light is filtered out.

Generally, the external light is incident from the side of the receiving end, and is incident through the light blocking assembly and the image generation element 102 in sequence. After passing through the image generation element 102, the external light has no effect on the image generation element 102, and the image generation element 102 does not generate an image signal. However, light heat of the external light is gathered on the image generation element 102, so that the temperature of the image generation element 102 is increased, affecting the operation performance of the image generation element 102.

When the optical module for head-up display is applied to the head-up display technology, it is generally used in transportation means such as automobiles. When the automobiles are driving outdoors, ambient light has great influences on the automobiles; therefore, the external light herein refers to sunlight. When the automobiles are driving outdoors, the sunlight is always inevitably incident on the optical module for head-up display from the side of the receiving end.

Therefore, a light blocking assembly is required to block this part of external light from being incident on the image generation element 102 by means of filtering or reflection, etc., and the light blocking assembly screens the external light. In this way, after the external light is screened by the light blocking assembly, most of the external light is filtered out by the light blocking assembly, and only a small part of the external light that is not filtered out reaches the image generation element 102, so that the light heat gathered to the image generation element 102 is reduced, then the influence of the external light on the image generation element 102 is alleviated or eliminated. Thus the problem of sunshine backflow in the related art is solved, and temperature rise of the image generation element 102 is inhibited, so as to ensure that the image generation element 102 can operate stably.

It can be seen from the above that there are two kinds of light incident on the optical module for head-up display, which are respectively light source capable of making the image generation element 102 generate the image signal and the external light that does not contribute to the image signal generated by the image generation element 102, wherein the light source and the external light are respectively incident from two directions, that is to say, light paths of the light source and the external light passing through the optical module for head-up display are completely opposite.

In the optical module for head-up display provided in some embodiments of the present disclosure, the image generation element 102 and the light blocking assembly are provided in sequence, wherein the image generation element 102 is configured to generate an image, light beams emitted from the light source, after passing through the image generation element 102, form the image light and generate the image signal, and then the image light with image signal information, after passing through the light blocking assembly, is received by a rear-end receiving end and forms an image. The image light is not affected or is rarely affected by the light blocking assembly when passing through the light blocking assembly, and original parameters of the image light remain unchanged. For example, after the image light passes through the light blocking assembly, the brightness of the image light does not change. In this process, the external light will be incident on the optical module for head-up display from the side of the receiving end, wherein the external light passes through the light blocking assembly and the image generation element 102 in sequence, and the external light does not generate an image after passing through the image generation element 102. However, the light heat of the external light will be gathered on the image generation element 102, increasing the temperature of the image generation element 102, and affecting the operation performance of the image generation element 102. Therefore, the light blocking assembly is used to filter out most of the external light, make a small part of the external light pass through, reduce the light heat of the external light on the image generation element 102, and reduce the temperature of the image generation element 102, so as to guarantee the operation performance of the image generation element 102. The light blocking assembly has no or little influence on the image light, and can make the image light pass through; however, the light blocking assembly can select which part of the external light can be transmitted according to the polarization direction or a wavelength of the light, or by combining the polarization direction and the wavelength. The light blocking assembly filters out most of the external light, and only a small part of the external light will pass through, such that the image light is received by the receiving end so as to generate an image. After the external light is filtered out by the light blocking assembly, the amount of the external light incident on the image generation element 102 is reduced, and the light heat gathered onto the image generation element 102 can be effectively reduced, achieving the purpose of reducing a surface temperature of the image generation element 102, and ensuring the image quality.

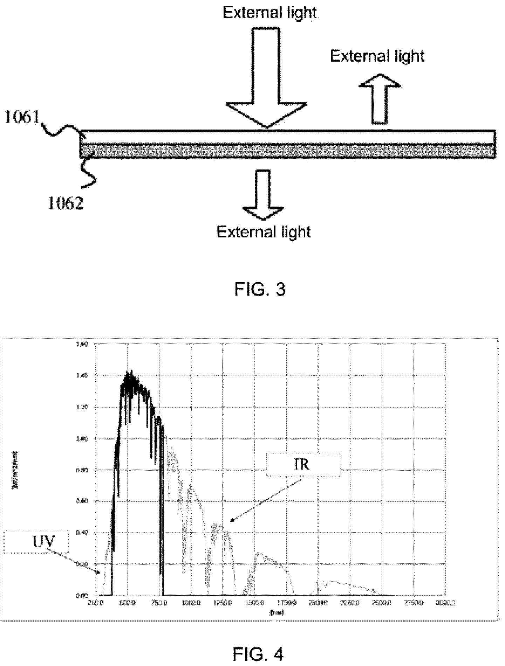

When the light blocking assembly screens the external light according to the polarization direction, the light blocking assembly includes a polarizing dust-proof film 106. As shown in FIG. 3, the polarizing dust-proof film 106 includes a transparent substrate 1061 and a polarizing film 1062 arranged on the transparent substrate 1061, wherein a polarization direction of the polarizing film 1062 is the same as the light-emitting direction of the light beams of the image signal formed by the image generation element 102.

The polarization direction of the polarizing film 1062 is the same as the light-emitting direction of the image light formed by the image generation element 102, that is, the two have consistent polarization directions, so that the image light can reach the receiving end through the polarizing film 1062.

The external light is relatively spurious, and has a plurality of polarization directions, wherein the external light having a polarization direction consistent with that of the polarizing film 1062 can be transmitted through the polarizing film 1062; and the external light having the polarization direction inconsistent with that of the polarizing film 1062 cannot be transmitted through the polarizing film 1062, and is filtered out by the polarizing film.

Therefore, when selecting parameters of the polarizing film 1062, it is required to select the polarizing film 1062 which has the polarization direction consistent with that of the image light and is also capable of filtering out as most of the external light as possible, so as to make the image light transmitted, and capable of filtering out most of the external light, achieving the purpose of reducing the temperature of the image generation element 102.

After selection, the polarizing dust-proof film 106 can prevent about half of the external light from entering the optical module for head-up display, and meanwhile has no or little influence on the brightness of the image light formed by the image generation element 102.

The polarizing dust-proof film 106 includes a transparent substrate 1061 and the polarizing film 1062, wherein the transparent substrate 1061 may be made of PC polycarbonate. The polarizing film 1062 is attached to the transparent substrate 1061, and the polarization direction of the polarizing film 1062 is matched with the light-emitting direction of the image light formed by the image generation element 102.

The polarizing film 1062 may be an absorption-type polarizing film 1062, configured to absorb incident light in a certain polarization direction; or the polarizing film 1062 may be a reflection-type polarizing film 1062, configured to reflect incident light in a certain polarization direction.

As shown in FIG. 3, most of the image light emitted by the image generation element 102 can pass through the polarizing film 1062, so that the brightness is not affected. For the external light (sunshine) coming from outside, only a part (about 50%) of light consistent with the light-emitting direction of the image generation element 102 can enter the image generation element 102 through the polarizing dust-proof film 106; while the other part is blocked outside the polarizing dust-proof film 106 in an absorbing or reflecting manner, and cannot be incident on the image generation element 102, therefore, the sunlight energies entering the image generation element 102 can be reduced effectively, thus achieving the purpose of reducing the surface temperature of the image generation element 102.

Optionally, the light blocking assembly further includes a light filtering element 103, wherein the light filtering element 103 is located between the polarizing dust-proof film 106 and the image generation element 102, so as to make a part of light in the external light transmitted according to the wavelength, and filter a part of light beams in the external light incident through the polarizing dust-proof film 106.

The external light is incident on the light filtering element 103 through the polarizing dust-proof film 106 from the receiving end, as shown in FIG. 2, the external light is generally sunlight. The sunlight has a quite large spectral range. In addition to visible light, there are also infrared light and ultraviolet light, and these lights, particularly infrared light, carry a large amount of energies of sunlight, therefore, if the light gathered on the image generation element 102 are not treated, the temperature of the image generation element 102 will be quite high, thus affecting the performance of the image generation element 102.

Since the infrared light carries most of the energies in the sunlight, the light filtering element 103 at least should be able to filter infrared light or a part of infrared light, so that most of the energies in the external light reaching the image generation element 102 can be filtered out.

The light filtering element 103 is at least configured to filter the infrared light and transmit visible light. The light filtering element can also filter ultraviolet light. An optical film is plated on the light filtering element 103. By means of the optical film, the light filtering element 103 not only can filter ultraviolet light, but also can filter infrared light; or only filter infrared light; or only filter a part of infrared light.

As one of the embodiments, the light filtering element 103 filters ultraviolet light with a wavelength less than 400 nm, and meanwhile filters infrared light with a wavelength greater than 680 nm, wherein energies of the filtered infrared light and ultraviolet light account for about 68% of sunlight energies entering the optical module for head-up display.

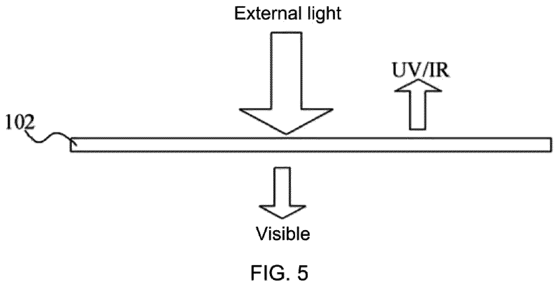

The light filtering element 103 can reflect infrared light (IR) and ultraviolet light (UV) in sunlight and transmit visible light (visible). As shown in FIG. 4 and FIG. 5, the light filtering element 103 is a light filter, and the light filter is attached to the image generation element 102. As the light filtering element 103 has very high transmittance in the visible light band, the influence on the image light emitted from the image generation element 102 is very small, i.e., the influence on the brightness of the image light is very small; in addition, the light filtering element 103 reflects infrared light and ultraviolet light, wherein when the sunlight passing through the polarizing dust-proof film 106 flows back onto the surface of the light filtering element 103, the infrared light and the ultraviolet light will be reflected, and the visible light can be transmitted. As the infrared light accounts for a large amount of energies, and is reflected and cannot reach the surface of the image generation element 102, the surface temperature of the image generation element 102 after using the light filtering element 103 will be further reduced, enhancing the operation stability of the image generation element 102.

Optionally, the light filtering element 103 includes a base material and a coating film arranged on the base material, wherein the base material of the light filtering element 103 can be glass D263T, and a material of the coating film of the light filtering element 103 can be TiO₂, or SiO₂ and the like, so as to enhance the light filtering effect.

In the above, the light filtering element 103 and the image generation element 102 are attached to each other. According to an example, which is not covered by the present set of-claims, the light filtering element 103 and the image generation element 102 can be separately arranged in the light path at intervals.

It can be seen from the above that the polarizing dust-proof film 106 filters a part of the external light according to the polarization direction, so as to reduce the total amount of the external light incident on the light filtering element 103. The light filtering element 103 can at least filter out the infrared light according to the wavelength, so as to reduce the heat brought by the infrared light to the image generation element 102. Through the combination of the polarizing dust-proof film 106 and the light filtering element 103 filtering the infrared light and the ultraviolet light, compared with head-up display system without using any strategy, by using the optical module for head-up display in the embodiment of the present disclosure, the sunlight energies reaching the surface of the image generation element 102 can be reduced by about 84%, wherein 84%≈1-50%*32%, 50% is the transmittance of the polarizing dust-proof film 106, and the polarizing dust-proof film 106 can reduce the entry of the external light by 50%; and 32% is a ratio of visible light energies (400 nm~640 nm) to total sunlight energies, which reduces most of the light energies reaching the surface of the image generation element 102, and effectively reduces the temperature of the surface of the image generation element 102, therefore, the image generation element 102 can be effectively protected, and the phenomenon of sunshine backflow in the head-up display technology can be improved.

Optionally, at least one reflecting surface is further provided between the polarizing dust-proof film 106 and the light filtering element 103, and configured to reflect light beams incident on the polarizing dust-proof film 106 towards the light filtering element 103, or reflect the light beams incident on the light filtering element 103 towards the polarizing dust-proof film.

The image light formed by the image generation element 102 is incident on the at least one reflecting surface through the light filtering element 103, and after being reflected by the at least one reflecting surface, is emitted to the polarizing dust-proof film 106; the external light incident from the receiving end is incident on the at least one reflecting surface through the polarizing dust-proof film 106, and after being reflected by the at least one reflecting surface, is incident on the light filtering element 103 and the image generation element 102 in sequence.

The reflecting surface completes light beam reflection between the light filtering element 103 and the polarizing dust-proof film 106 for imaging. Exemplarily, in an embodiment of the present disclosure, two reflecting mirrors are used, which are a first reflecting mirror 104 and a second reflecting mirror 105, respectively, and the light beam reflection between the light filtering element 103 and the polarizing dust-proof film 106 is completed by the first reflecting mirror 104 and the second reflecting mirror 105.

The reflecting surface is a curved surface. When the first reflecting mirror 104 and the second reflecting mirror 105 are used, the first reflecting mirror 104 has two reflecting surfaces, and can respectively reflect light in two directions, i.e., the image light and the external light. The two reflecting surfaces of the first reflecting mirror 104 both can be curved surfaces, and it is also possible that only one reflecting surface is a curved surface. The second reflecting mirror 105 is in the same case.

With regard to the characteristic that a curved-surface cold mirror is difficult to process in the related art, the optical module for head-up display provided in the embodiment of the present disclosure solves and ameliorates the problem of sunshine backflow by means of the polarizing dust-proof film 106 and the light filtering element 103, wherein the polarizing dust-proof film 106 prevents about half of the external light from entering the optical module for head-up display without affecting the image light; and the light filtering element 103 reflects the infrared light and the ultraviolet light that reach the surface of the image generation element 102 when the sunshine backflow occurs, and has no influence on the image light. The advantage thereof is that the two reflecting mirrors used in the optical module for head-up display for imaging both can be made into curved surfaces, which is beneficial for optimizing the imaging quality to a relatively good state during imaging, so that the whole optical module for head-up display can obtain a relatively good image quality. Since AR HUD needs a longer virtual image distance and a larger angle of field of view, this advantage is particularly obvious in AR HUD.

Some other embodiments of the present disclosure further provide an optical system for head-up display, wherein the optical system includes a backlight module 101 and the optical module for head-up display provided in some embodiments of the present disclosure, and wherein the image generation element 102 of the optical module for head-up display is located on a light emergent side of the backlight module 101, that is, the light source emitted from the backlight module 101 forms image light after passing through the image generation element 102, and generates an image signal.

The optical system for head-up display includes the same structure and beneficial effects as the optical module for head-up display in the preceding embodiments. The structure and beneficial effects of the optical module for head-up display have been described in detail in the preceding embodiments, and are not described herein again.

When the above optical system for head-up display is applied to a vehicle, some further embodiments of the present disclosure further provide a vehicle, wherein the vehicle includes a vehicle body and the optical system for head-up display provided in some other embodiments of the present disclosure, the optical system for head-up display is provided on the vehicle body, and the light blocking assembly and the receiving end of the optical system for head-up display are respectively located at two sides of a windscreen 107 of the vehicle body.

The optical system for head-up display is provided on the vehicle body, and the light blocking assembly and the receiving end are respectively located at two sides of the windscreen 107 of the vehicle body. The imaging principle thereof is as follows: the image generation element 102 is loaded with information that needs to be displayed, wherein the information may include information such as current speed per hour of the vehicle and navigation, the backlight module 101 generates uniform light source to illuminate the image generation element 102 and forms image light, then the image light passes through the light filtering element 103, the first reflecting mirror 104, the second reflecting mirror 105, and the polarizing dust-proof film 106 to emit to the windscreen 107, and then the image light, after being reflected by the windscreen 107, enters a movement range of eyes of the driver (eyebox 108), wherein the eyebox 108 is the receiving end. The various elements above can constitute an imaging system, and the image light passes through the imaging system to form an enlarged virtual image at a certain distance, wherein when the eyes of the driver are within the range of the eyebox 108, this virtual image can be seen.

The windscreen 107 also can be regarded as a receiving end, and the windscreen 107 is used to participate in imaging. For the image light, the windscreen 107 reflects a part of the image light, and transmits a part of the image light; likewise, for the external light, a part of the external light is reflected and a part of the external light is transmitted. For sunlight at some angles, it enters the optical system for head-up display after transmitting through the windscreen 107, and is gathered onto the image generation element 102 after being reflected by the optical element, thus generating a phenomenon of sunshine backflow. By means of the light blocking assembly, the problem of sunshine backflow is solved or ameliorated, so as to improve the imaging quality.

The vehicle provided in the embodiments of the present disclosure, by being provided with the optical system for head-up display, can project information such as the current speed per hour of the vehicle and navigation onto an optoelectronic display device on the windscreen 107 by providing the optical system for head-up display, and form an image in front of the windscreen 107. The driver can see navigation and vehicle speed information by directly looking at the windscreen 107 without turning or lowering head, thus improving the driving safety. Moreover, by means of the optical system for head-up display, the problem of sunshine backflow is solved and ameliorated, so that the driver can see an image with relatively good quality on the windscreen 107, thus improving the comfort degree of the driver experience.

The above-mentioned are merely for embodiments of the present disclosure but not intended to limit the scope of protection of the present disclosure. For one skilled in the art, various modifications and variations may be made to the present disclosure. Any modifications, equivalent substitutions, improvements and so on, within the spirit and principle of the present disclosure, should be covered within the scope of protection of the present disclosure.

### Industrial Applicability

The present disclosure provides an optical module and an optical system thereof for head-up display, and a vehicle, wherein the optical module for head-up display includes the image generation element and the light blocking assembly which are provided in sequence, and wherein the image generation element is configured to form the image signal, the image signal is incident on the receiving end through the light blocking assembly; and the light blocking assembly is further configured to make part of external light transmitted according to a polarization direction and/or wavelength. The image signal is not affected or rarely affected by the light blocking assembly when passing through the light blocking assembly. The external light passes through the light blocking assembly and the image generation element in sequence, and after the external light passes through the image generation element, no image is generated, but light heat of the external light is gathered on the image generation element, increasing the temperature of the image generation element. The light blocking assembly is used to filter out most of the external light, and only make a small part of the external light pass through, reducing the light heat of the external light on the image generation element, reducing the temperature of the image generation element, and ensuring the image quality.

Besides, it may be understood that the optical module for head-up display and the optical system thereof and the vehicle in the present disclosure can be reproduced, and can be used in a variety of industrial applications. For example, the optical module for head-up display and the optical system thereof, and the vehicle can be used in the technical field of head-up display.

## Claims

1. An optical module for head-up display comprising an image generation element (102) and a light blocking assembly which are provided in sequence, wherein the image generation element (102) is configured to form an image signal, the image signal is incident on a receiving end through the light blocking assembly; and the light blocking assembly is further configured to make a part of external light transmitted according to a polarization direction and/or wavelength;
wherein the light blocking assembly comprises a polarizing dust-proof film (106); and
the polarizing dust-proof film (106) comprises a transparent substrate (1061) and a polarizing film (1062) arranged on the transparent substrate (1061), and a polarization direction of the polarizing film (1062) is the same as a light-emitting direction of the image generation element (102);
**characterized in that,**
wherein the light blocking assembly further comprises a light filtering element (103), and the light filtering element (103) is located between the polarizing dust-proof film (106) and the image generation element (102), so as to make a part of the external light transmitted according to the wavelength; and
the light filtering element (103) and the image generation element (102) are attached to each other.

2. The optical module according to claim 1, wherein the polarizing film (1062) is an absorption-type polarizing film (1062) or a reflection-type polarizing film (1062).

3. The optical module according to claim 1, wherein the light filtering element (103) is at least configured to filter infrared light and transmit visible light.

4. The optical module according to claim 3, wherein the light filtering element (103) further filters ultraviolet light.

5. The optical module according to any one of claims 1 to 4, wherein the light filtering element (103) comprises a base material and a coating film arranged on the base material, and wherein the base material of the light filtering element (103) is glass D263T, and a material of the coating film of the light filtering element (103) is TiO₂, or SiO₂.

6. The optical module according to any one of claims 1 to 5, wherein at least one reflecting surface is further provided between the polarizing dust-proof film (106) and the light filtering element (103), and configured to reflect light beams incident on the polarizing dust-proof film (106) towards the light filtering element (103), or reflect light beams incident on the light filtering element (103) towards the polarizing dust-proof film (106).

7. The optical module according to claim 6, wherein the reflecting surface is a curved surface.

8. An optical system for head-up display, **characterized by** comprising a backlight module and the optical module for head-up display according to any one of claims 1 to 7, wherein the image generation element (102) of the optical module for head-up display is located on a light emergent side of the backlight module.

9. A vehicle, **characterized by** comprising a vehicle body and the optical system for head-up display according to claim 8, wherein the optical system for head-up display is provided on the vehicle body, and the light blocking assembly and the receiving end of the optical system for head-up display are respectively located on two sides of a windscreen of the vehicle body.

## Patentansprüche

1. Optisches Modul für eine Frontscheibenanzeige, das ein Bilderzeugungselement (102) und eine lichtblockierende Anordnung umfasst, die in Reihe bereitgestellt sind, wobei das Bilderzeugungselement (102) konfiguriert ist, um ein Bildsignal zu bilden, wobei das Bildsignal durch die lichtblockierende Anordnung hindurch auf ein Empfängerende einfällt; und die lichtblockierende Anordnung weiter konfiguriert ist, um einen Teil des externen Lichts entsprechend einer Polarisationsrichtung und/oder Wellenlänge durchzulassen;
wobei die lichtblockierende Anordnung eine polarisierende Staubschutzfolie (106) umfasst; und
wobei die polarisierende Staubschutzfolie (106) ein transparentes Substrat (1061) und eine auf dem transparenten Substrat (1061) angeordnete polarisierende Folie (1062) umfasst, und eine Polarisationsrichtung der polarisierenden Folie (1062) die gleiche ist wie eine Richtung der Lichtemission des Bilderzeugungselements (102);
**dadurch gekennzeichnet, dass**
wobei die lichtblockierende Anordnung weiter ein lichtfilterndes Element (103) umfasst und sich das lichtfilternde Element (103) zwischen der polarisierenden Staubschutzfolie (106) und dem Bilderzeugungselement (102) befindet, um einen Teil des externen Lichts entsprechend der Wellenlänge durchzulassen; und
das lichtfilternde Element (103) und das Bilderzeugungselement (102) aneinander befestigt sind.

2. Optisches Modul nach Anspruch 1, wobei die polarisierende Folie (1062) eine polarisierende Folie (1062) vom Absorptionstyp oder eine polarisierende Folie (1062) vom Reflexionstyp ist.

3. Optisches Modul nach Anspruch 1, wobei das lichtfilternde Element (103) mindestens konfiguriert ist, um Infrarotlicht zu filtern und sichtbares Licht durchzulassen.

4. Optisches Modul nach Anspruch 3, wobei das lichtfilternde Element (103) weiter ultraviolettes Licht filtert.

5. Optisches Modul nach einem der Ansprüche 1 bis 4, wobei das lichtfilternde Element (103) ein Basismaterial und eine auf dem Basismaterial angeordnete Beschichtungsfolie umfasst und wobei das Basismaterial des lichtfilternden Elements (103) D263T-Glas ist und ein Material der Beschichtungsfolie des lichtfilternden Elements (103) TiO₂ oder SiO₂ ist.

6. Optisches Modul nach einem der Ansprüche 1 bis 5, wobei zwischen der polarisierenden Staubschutzfolie (106) und dem lichtfilternden Element (103) weiter mindestens eine reflektierende Oberfläche bereitgestellt und konfiguriert ist, um auf die polarisierende Staubschutzfolie (106) einfallende Lichtstrahlen in Richtung des lichtfilternden Elements (103) zu reflektieren oder auf das lichtfilternde Element (103) einfallende Lichtstrahlen in Richtung der polarisierenden Staubschutzfolie (106) zu reflektieren.

7. Optisches Modul nach Anspruch 6, wobei die reflektierende Oberfläche eine gekrümmte Oberfläche ist.

8. Optisches System für Frontscheibenanzeigen, **dadurch gekennzeichnet, dass** es ein Hintergrundbeleuchtungsmodul und das optische Modul für eine Frontscheibenanzeige nach einem der Ansprüche 1 bis 7 umfasst, wobei sich das Bilderzeugungselement (102) des optischen Moduls für Frontscheibenanzeigen auf einer Lichtaustrittsseite des Hintergrundbeleuchtungsmoduls befindet.

9. Fahrzeug, **dadurch gekennzeichnet, dass** es eine Fahrzeugkarosserie und das optische System für eine Frontscheibenanzeige nach Anspruch 8 umfasst, wobei das optische System für eine Frontscheibenanzeige an der Fahrzeugkarosserie bereitgestellt ist und die lichtblockierende Anordnung und das Empfängerende des optischen Systems für eine Frontscheibenanzeige sich jeweils auf zwei Seiten einer Windschutzscheibe der Fahrzeugkarosserie befinden.

## Revendications

1. Module optique pour affichage tête haute comprenant un élément de génération d'image (102) et un ensemble de blocage de lumière qui sont fournis en séquence, dans lequel l'élément de génération d'image (102) est configuré pour former un signal d'image, le signal d'image est incident sur une extrémité de réception à travers l'ensemble de blocage de lumière ; et l'ensemble de blocage de lumière est en outre configuré pour qu'une partie de lumière externe soit transmise selon une direction de polarisation et/ou une longueur d'onde ;
dans lequel l'ensemble de blocage de lumière comprend un film anti-poussière polarisant (106) ; et
le film anti-poussière polarisant (106) comprend un substrat transparent (1061) et un film polarisant (1062) agencé sur le substrat transparent (1061), et une direction de polarisation du film polarisant (1062) est la même qu'une direction d'émission de lumière de l'élément de génération d'image (102) ;
**caractérisé en ce que**
dans lequel l'ensemble de blocage de lumière comprend en outre un élément de filtrage de lumière (103), et l'élément de filtrage de lumière (103) est situé entre le film anti-poussière polarisant (106) et l'élément de génération d'image (102), de manière à ce qu'une partie de la lumière externe soit transmise selon la longueur d'onde ; et
l'élément de filtrage de lumière (103) et l'élément de génération d'image (102) sont fixés l'un à l'autre.

2. Module optique selon la revendication 1, dans lequel le film polarisant (1062) est un film polarisant à absorption (1062) ou un film polarisant à réflexion (1062).

3. Module optique selon la revendication 1, dans lequel l'élément de filtrage de lumière (103) est au moins configuré pour filtrer de la lumière infrarouge et transmettre de la lumière visible.

4. Module optique selon la revendication 3, dans lequel l'élément de filtrage de lumière (103) filtre en outre de la lumière ultraviolette.

5. Module optique selon l'une quelconque des revendications 1 à 4, dans lequel l'élément de filtrage de lumière (103) comprend un matériau de base et un film de revêtement agencé sur le matériau de base, et dans lequel le matériau de base de l'élément de filtrage de lumière (103) est du verre D263T, et un matériau du film de revêtement de l'élément de filtrage de lumière (103) est du TiO₂ ou du SiO₂.

6. Module optique selon l'une quelconque des revendications 1 à 5, dans lequel au moins une surface réfléchissante est en outre fournie entre le film anti-poussière polarisant (106) et l'élément de filtrage de lumière (103), et configurée pour réfléchir des faisceaux de lumière incidents sur le film anti-poussière polarisant (106) vers l'élément de filtrage de lumière (103), ou réfléchir des faisceaux de lumière incidents sur l'élément de filtrage de lumière (103) vers le film anti-poussière polarisant (106).

7. Module optique selon la revendication 6, dans lequel la surface réfléchissante est une surface incurvée.

8. Système optique pour affichage tête haute, **caractérisé en ce qu'**il comprend un module de rétroéclairage et le module optique pour affichage tête haute selon l'une quelconque des revendications 1 à 7, dans lequel l'élément de génération d'image (102) du module optique pour affichage tête haute est situé sur un côté d'émergence de lumière du module de rétroéclairage.

9. Véhicule, **caractérisé en ce qu'**il comprend une carrosserie de véhicule et le système optique pour affichage tête haute selon la revendication 8, dans lequel le système optique pour affichage tête haute est fourni sur la carrosserie de véhicule, et l'ensemble de blocage de lumière et l'extrémité de réception du système optique pour affichage tête haute sont respectivement situés sur deux côtés d'un pare-brise de la carrosserie de véhicule.
